# EUROPEAN PATENT SPECIFICATION

(11) **EP 3 988 978 B1**
(45) Date of publication and mention of the grant of the patent: **22.01.2025**
(21) Application number: 20852541.0
(22) Date of filing: 12.08.2020
(51) Int. Cl.: G02B 6/44, G02B 6/38

(54) **CABLE PROTECTION SHELL AND COMMUNICATION DEVICE**
KABELSCHUTZHÜLLE UND KOMMUNIKATIONSGERÄT
COQUE DE PROTECTION DE CÂBLE ET DISPOSITIF DE COMMUNICATION

(30) Priority: 15.08.2019 CN 201910753594
(43) Date of publication of application: 27.04.2022
(73) Proprietor: Huawei Technologies Co., Ltd., Longgang District Shenzhen, Guangdong 518129 (CN)
(72) Inventor: CHENG, Jian, Shenzhen, Guangdong 518129 (CN); CHEN, Bingjun, Shenzhen, Guangdong 518129 (CN); PEI, Guohua, Shenzhen, Guangdong 518129 (CN); YANG, Anliang, Shenzhen, Guangdong 518129 (CN)
(74) Representative: Thun, Clemens
(86) International application number: PCT/CN2020/108741
(87) International publication number: WO 2021/027856

(56) References cited:
- WO-A1-2019/040824
- CN-A- 108 063 313
- CN-U- 201 594 579
- CN-U- 201 994 622
- CN-U- 203 103 895
- CN-U- 207 623 575
- CN-U- 208 991 300
- US-A1- 2015 370 029
- US-A1- 2017 261 695

## Description

### TECHNICAL FIELD

This application relates to the field of communication technologies, and in particular, to a cable protective housing and a communication device.

### BACKGROUND

In most existing network pre-connection installation, a connector of an optical cable is inserted into an adapter. The connector is rotated at a specific angle and clamped into the adapter, to complete a connection between the optical cable and the adapter. This installation mode is convenient and fast, and construction time is reduced. However, this easy-to-install mode also means being easy to be disassembled. The connector can be removed only by rotating the connector in an opposite direction. This brings some risks. For example, service interruption occurs due to a misoperation of rotating out or deliberate destruction and disassembly. In addition, there is a theft risk. These risks are especially severe for splitting and splicing closures and fiber access terminals that need to be installed on walls or used in exposed environments.

In an existing anti-theft and anti-disassembly solution, a protective case is used to cover all the splitting and splicing closures or the fiber access terminals, and associated connectors at the same time, so that the connectors are invisible from outside. Although this overall protection mode can achieve anti-theft and anti-disassembly effects, this overall protection mode increases a volume of the protective case to a large extent, thereby affecting aesthetics. In addition, the protective case needs to be customized based on different optical cables and layouts of the optical cables. Universality of the protective case is poor. In addition, during subsequent maintenance, even if only one connector needs to be maintained, the entire protective case needs to be opened. This not only causes inconvenience in operation, but also prevents other connectors that do not need to be maintained from being protected. This increases a service interruption risk caused by a misoperation.

Document WO 2019/040824 A1 describes a fiber-optic connection assembly including a cable, a fiber-optic connector and an adapter. The cable terminates with the fiber-optic connector. The fiber-optic connector is removably connected to the adapter with a fastener. The fiber-optic connection assembly also includes a cover that is configured to inhibit access to the fastener. The cover includes a pasageway that is configured to removably receive at least a portion of the fiber-optic connector and at least a portion of the adapter.
Document US 2017/0261695 Al shows a retrofit cover for a fiber optic cable connection, whereas the fiber optic cable connection includes a cap portion having a first bousing portion having a first housing wall, a second housing portion having a second housing wall, and a coupler portion that couples the first housing portion and the second housing portion in a closed position.
The CN 201 594 579 U discloses an antenna feeder connector protecting box which comprises a box body and a wedge-shaped slide fastener, wherein the box body comprises a first part and a second part which are connected with each other on one side of the box body; the other side of the box body is buckled by the wedge-shaped slide fastener. The CN 203 103 895 U describes a connector protecting box comprising two connecting pieces, wherein each connecting piece comprises a shell and an elastic sealing colloid. Each shell comprises a first side and a second side, and the first side of the shell of one connecting piece is connected with the first side of the shell of the other connecting piece in a relatively-pivoted way.
The CN 108 063 313 A discloses an easy-to-install anti-seepage antenna feeder system. The system comprises a conversion module which is arranged at a terminal of the antenna feeder system, a transmission module comprising a first transmission section, a second transmission section and a third transmission section, a control module which is connected to the third transmission section, and a protection module which includes a first protection member and a second protection member, wherein an antenna feeder connector protection device is arranged at a joint of the first transmission section and the conversion module and comprises a shell body, a sealing piece, a damping component and an anti-seepage piece. The antenna feeder connector protection device is used for the external protection of an antenna feeder connector in the invention.

### SUMMARY

This application provides a cable protective housing and a communication device, to facilitate maintenance when cable security is improved.

According to a first aspect, a cable protective housing is provided. The cable protective housing includes two housings, the two housings are disposed opposite to each other, and the two housings are detachably fastened and connected. During specific connection, one side of one housing may be rotatably connected to one side of the other housing, and the other side of the housing may be detachably fastened and connected to the other side of the other housing; or both two sides of one housing may be detachably fastened and connected to two sides of the other housing. In addition, structures of the two housings are similar. For example, each housing includes a first groove and a second groove that communicates with the first groove, and one end that is of the first groove and that is away from the second groove is provided with a limiting bulge configured to be clamped into a cable. When the two housings are fastened and connected, the two first grooves enclose a first accommodation cavity configured to accommodate a cable connector, and the limiting bulge is configured to limit axial sliding of the cable connector and the first accommodation cavity. The two second grooves enclose a second accommodation cavity that accommodates a cable installation head. In the foregoing technical solution, an axial sliding direction of the cable protective housing is limited by using the limiting bulge. In addition, when the cable protective housing is sleeved on the cable connector and the cable installation head, the cable protective housing is capable of rotating relative to the cable connector. When the cable is removed from the cable installation head, the cable connector needs to be rotated relative to the cable installation head, and the disposed cable protective housing prevents the cable connector from being directly rotated. Therefore, the cable connector cannot be directly removed from the cable installation head under protection of the cable protective housing, thereby improving cable security. Further according to the invention, the diameter of the first groove is less than a diameter of the second groove.

According to the invention, the two housings are detachably fastened and connected through fitting between buckles and clamping slots. A fixed connection between the two housings is implemented through the fitting between the buckles and the clamping slots.

According to the invention, each housing includes a first housing structure and a second housing structure connected to the first housing structure. The first groove is disposed inside the first housing structure, and the second groove is disposed inside the second housing structure. A housing is formed by using the two housing structures.

According to the invention, a cross-sectional size of the second housing structure is greater than a cross-sectional size of the first housing structure.

In a specific implementable solution, a cross-sectional area of the first accommodation cavity is greater than a cross-sectional area of the cable connector, and a cross-sectional area of the second accommodation cavity is greater than a cross-sectional area of the cable installation head, so that it is ensured that the cable protective housing is capable of rotating relative to the cable connector and the cable installation head.

According to the invention, each first housing structure is provided with a surrounding edge structure. In addition, when the two housings are detachably fastened and connected by using the buckles and the clamping slots, the buckles and the clamping slots are respectively and correspondingly disposed on the surrounding edge structures of the two first housing structures. The surrounding edge structures are used to bear the buckles and the clamping slots.

In a specific implementable solution, there are two buckles, and the two buckles are symmetrically disposed. Reliability of the connection between the two housings is improved.

In a specific implementable solution, bending directions of clamping hooks of the two buckles are opposite. Stability of connections between the buckles and the clamping slots is improved. Certainly, the bending directions of the clamping hooks of the two buckles may also be the same. This can also improve stability of the fitting between the buckles and the clamping slots.

In a specific implementable solution, a notch is disposed in the surrounding edge structure. The notch is used to insert a tool to level the buckles and the clamping slots open.

In a specific implementable solution, the notch is located between the two buckles. When the buckles and the clamping slots are leveled open, force of the two buckles is balanced.

In a specific implementable solution, a baffle plate that shields the notch is disposed on the surrounding edge structure, and the baffle plate is capable of rotating relative to the surrounding edge structure. This improves the cable security.

In a specific implementable solution, the baffle plate is located inside the notch and has a specified distance from a side surface of the surrounding edge structure. The tool is easy to insert.

According to a second aspect, a communication device is provided. The communication device includes a device body and at least one cable. At least one cable installation head that is in a one-to-one correspondence with the at least one cable is disposed on the device body. Each cable is provided with a cable connector, and each cable connector is detachably fastened and connected to a corresponding cable installation head. The foregoing cable protective housing that is sleeved on each cable connector and the corresponding cable installation connector is further included. In the foregoing technical solution, an axial sliding direction of the cable protective housing is limited by using a limiting bulge. In addition, when the cable protective housing is sleeved on the cable connector and the cable installation head, the cable protective housing is capable of rotating relative to the cable connector. When a cable is removed from the cable installation head, the cable connector needs to be rotated relative to the cable installation head, and the disposed cable protective housing prevents the cable connector from being directly rotated. Therefore, the cable connector cannot be directly removed from the cable installation head under protection of the cable protective housing, thereby improving cable security.

In a specific implementable solution, each cable is sleeved with a connecting wire, and the connecting wire is fastened and connected to the device body. This further improves the cable security.

### BRIEF DESCRIPTION OF DRAWINGS

FIG. 1 is a schematic structural diagram of a cable protective housing according to an embodiment of this application;
FIG. 2 is a schematic diagram of a front structure after a cable protective housing is opened according to an embodiment of this application;
FIG. 3 is a schematic diagram of a rear structure after a cable protective housing is opened according to an embodiment of this application;
FIG. 4 is a use reference diagram of a cable protective housing according to an embodiment of this application;
FIG. 5 is a side view of a cable protective housing when the cable protective housing is used according to an embodiment of this application; and
FIG. 6 is a partial enlarged view of a position A in FIG. 5.

### DESCRIPTION OF EMBODIMENTS

To make objectives, technical solutions, and advantages of this application clearer, the following further describes this application in detail with reference to accompanying drawings.

For ease of understanding, the following terms are explained first:

Pre-connected cable: The pre-connected cable is a type of optical cable with a connector. The connector of the optical cable has been pre-connected in a factory and is directly inserted into a corresponding adapter on a construction site, to implement plug-and-play.

Splitting and splicing closure: The splitting and splicing closure is an outdoor product that can be installed through a hole that can hold one person or a hole that can hold one hand. The splitting and splicing closure is mainly used at a user access point of an optical access network, to connect optical cables and route a drop cable from a user terminal.

Fiber access terminal: The fiber access terminal is located at a user access point of an optical access network, to connect a distribution optical cable and a drop cable, and implement a direct connection, branching, and protection of an optical fiber.

In this application, a cable in the following refers to the foregoing pre-connected cable. When the pre-connected cable is used, the pre-connected cable may be connected to the splitting and splicing closure and the fiber access terminal. An cable connector is disposed at one end of the pre-connected cable, and the cable connector is capable of rotating relative to the optical cable. Cable installation heads corresponding to the pre-connected cable are disposed on the splitting and splicing closure and the fiber access terminal. When the pre-connected cable is connected to the splitting and splicing closure or the fiber access terminal, the cable connector is connected to the cable installation head and the cable connector is rotated, so that the cable connector is clamped with the cable installation head. In this way, the pre-connected cable is connected to the splitting and splicing closure or the fiber access terminal. During disassembly, the cable connector is rotated reversely at a specific angle, to disconnect the pre-connected cable from the splitting and splicing closure or the fiber access terminal.

A cable protective housing provided in this embodiment of this application is an apparatus for protecting the pre-connected cable. The following describes the cable protective housing in detail with reference to specific accompanying drawings and specific embodiments.

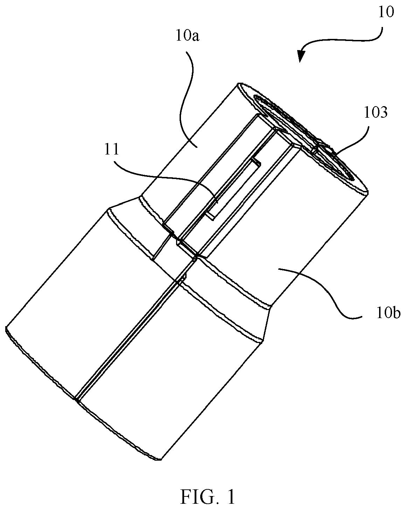

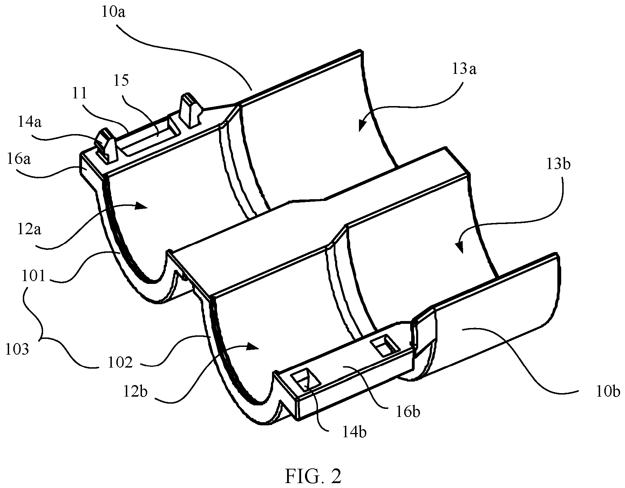

As shown in FIG. 1 and FIG. 2, FIG. 1 is a schematic diagram of an overall structure of a cable protective housing, and FIG. 2 is a schematic diagram of an open state of the cable protective housing. A body of the cable protective housing 10 shown in FIG. 1 and FIG. 2 includes two housings. For ease of description, the two housings are respectively named a first housing 10a and a second housing 10b. The first housing 10a and the second housing 10b can enclose cavities that accommodate a cable connector 50 and a cable installation head 20.

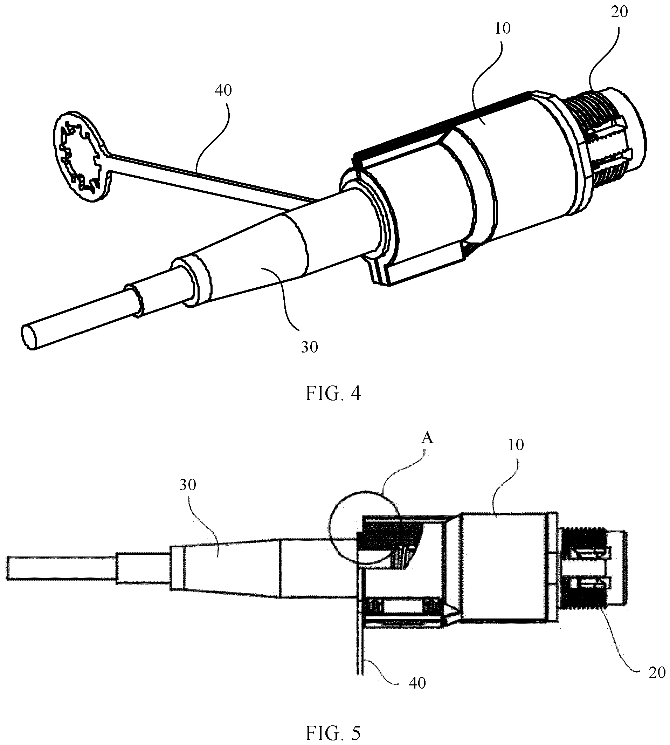

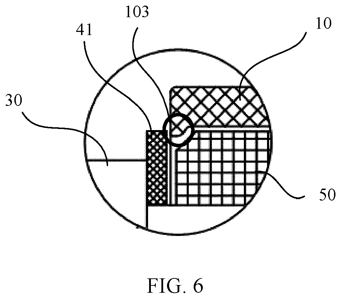

First, a structure of the first housing 10a is described. As shown in FIG. 2, the first housing 10a is of a semi-cylindrical structure. The first housing 10a has two grooves: a first groove 12a and a second groove 13a. The first groove 12a and the second groove 13a are arranged along a length direction of the first housing 10a and communicate with each other. Referring to FIG. 2, FIG. 5, and FIG. 6 together, FIG. 5 is a reference diagram of a use state of the cable protective housing 10 and FIG. 6 is a partial enlarged view of a position A in FIG. 5. The first groove 12a is configured to accommodate the cable connector 50, and the second groove 13a is configured to accommodate the cable installation head 20.

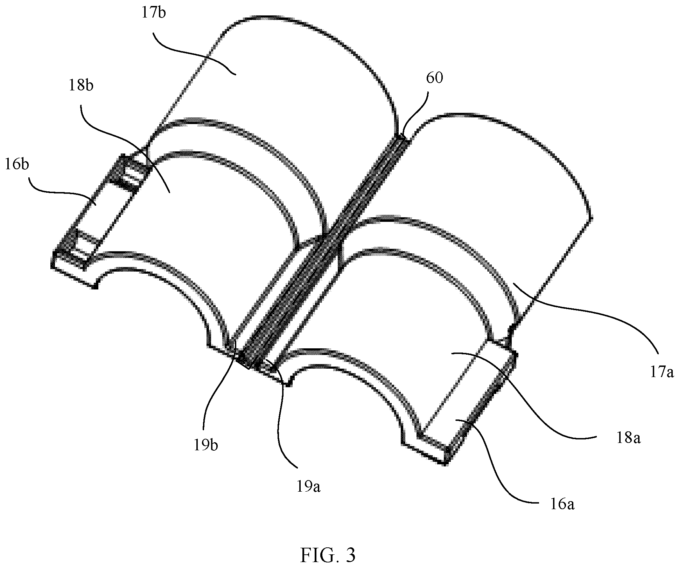

Referring to FIG. 3 together, FIG. 3 is a schematic structural diagram of the other side of the cable protective housing. It can be learned from a structure shown in FIG. 3 that the first housing 10a includes a first housing structure 18a and a second housing structure 17a, and the first housing structure 18a is fastened and connected to the second housing structure 17a. Certainly, an integrated structure may alternatively be used, for example, the first housing structure 18a and the second housing structure 17a are integrally formed through plastic injection or by using an extrusion molding process. Still referring to FIG. 3, both the first housing structure 18a and the second housing structure 17a are semi-cylindrical housing structures, and a cross-sectional size of the second housing structure 17a is greater than a cross-sectional size of the first housing structure 18a. In other words, an outside diameter of the second housing structure 17a is greater than an outside diameter of the first housing structure 18a. A step structure (not shown in the figure) is formed at a joint of the first housing structure 18a and the second housing structure 17a. Referring to FIG. 2 and FIG. 3 together, the first groove 12a is disposed inside the first housing structure 18a, in other words, the first groove 12a is an inner cavity of the first housing structure 18a. Similarly, the second groove 13a is disposed inside the second housing structure 17a, in other words, the second groove 13a is an inner cavity of the second housing structure 17a. When the first groove 12a and the second groove 13a are specifically disposed, both the first groove 12a and the second groove 13a are also semi-cylindrical grooves, and a diameter of the first groove 12a is less than a diameter of the second groove 13a. When the first groove 12a is configured to accommodate the cable connector 50, and the diameter of the first groove 12a is specifically set, the diameter of the first groove 12a is greater than a diameter of the cable connector 50. Similarly, when the second groove 13 accommodates the cable installation head 20, the diameter of the second groove 13 is also greater than a diameter of the cable installation head 20.

It should be understood that, in FIG. 2 and FIG. 3, that the first housing structure 18a and the second housing structure 17a that are of the first housing 10a use semi-cylindrical structures is merely a specific example. The first housing structure 18a and the second housing structure 17a provided in this embodiment of this application may alternatively use structures in a cuboid shape or another shape. It only needs to be ensured that the first groove 12a and the second groove 13a can be disposed inside the first housing structure 18a and the second housing structure 17a. In addition, the first groove 12a and the second groove 13a shown in FIG. 2 and FIG. 3 are merely specific examples. The first groove 12a and the second groove 13a provided in this embodiment of this application may alternatively be grooves of other shapes such as a rectangle and a triangle. However, regardless of a shape of a groove that is used, a minimum cross-sectional size of the first groove 12a needs to be greater than a radius of the cable connector 50, and a minimum cross-sectional size of the second groove 13a needs to be greater than a radius of the cable installation head 20. In this way, when the cable connector 50 and the cable installation head 20 are accommodated, the cable protective housing 10 is capable of rotating relative to the cable connector 50.

Still referring to FIG. 2 and FIG. 3, the second housing 10b is symmetrical to the first housing 10a, and the second housing 10b is also of a semi-cylindrical structure. The second housing 10b includes a first housing structure 18b and a second housing structure 17b. In addition, the first housing structure 18b and the second housing structure 17b are the same as the first housing structure 18a and the second housing structure 17a that are of the first housing 10a. For details, refer to the foregoing specific descriptions of the first housing structure 18a and the second housing structure 17a that are of the first housing 10a. In addition, the second housing 10b also has a first groove 12b and a second groove 13b that are arranged along a length direction of the second housing 10b. The first groove 12b also communicates with the second groove 13b. For a manner of disposing the first groove 12b and the second groove 13b that are of the second housing 10b, refer to the foregoing specific descriptions of the first groove 12a and the second groove 13a that are of the first housing 10a.

Still referring to FIG. 1 and FIG. 2, the first housing 10a and the second housing 10b are detachably fastened and connected. After the first housing 10a and the second housing 10b shown in FIG. 1 are fastened and connected, the first groove 12a and the first groove 12b enclose a first accommodation cavity that accommodates the cable connector 50, and the second groove 13a and the second groove 13b enclose a second accommodation cavity that accommodates the cable installation head 20. Referring to FIG. 2 together, one side of the first housing 10a is rotatably connected to one side of the second housing 10b, and the other side of the first housing 10a may be detachably fastened and connected to the other side of the second housing 10b through fitting between a buckle 14a and a clamping slot 14b. In a specific implementation, the first housing 10a and the second housing 10b may be prepared in an integrally formed manner, and the side of the first housing 10a and the side of the second housing 10b that are adjacent to each other are flexibly connected, to be specific, the first housing 10a is connected to the second housing 10b by using a bendable connection part 60. When the first housing 10a is connected to the second housing 10b, the first housing 10a is connected to the second housing 10b through deformation of the connection part 60, and the other side of the first housing 10a and the other side of the second housing 10b are connected through fitting between the buckle 14a and the clamping slot 14b.

Still referring to FIG. 2 and FIG. 3, FIG. 2 and FIG. 3 show a specific connection manner of the first housing 10a and the second housing 10b. As shown in FIG. 3, surrounding edge structures are respectively disposed on two sides of the first housing structure 18a. According to the claimed invention, a first surrounding edge structure 19a and a second surrounding edge structure 16a are respectively disposed on the two sides of the first housing structure 18a, and first surrounding edge structure 19b and a second surrounding edge structure 16b are respectively disposed on two sides of the first housing structure 18b. A width of the first surrounding edge structure 19a is equal to a diameter difference between the first housing structure 18a and the second housing structure 17a. In this way, the first surrounding edge structure 19a is flush with the second housing structure 17a, one side of the connection part 60 is connected to the second housing structure 17a and the first surrounding edge structure 19a, and the other side of the connection part 60 is connected to the second housing structure 17b and the first surrounding edge structure 19b. A width of the second surrounding edge structure 16a is greater than the diameter difference between the first housing structure 18a and the second housing structure 17a. Therefore, the second surrounding edge structure 16a protrudes outside the second housing structure 17a. Similarly, the second surrounding edge structure 16b also protrudes outside the second housing structure 17b.

Still referring to FIG. 2, when the buckle 14a and the clamping slot 14b are disposed, the buckle 14a may be disposed on an inner side of the second surrounding edge structure 16a, and the clamping slot 14b is disposed on the second surrounding edge structure 16b. There may be two buckles 14a, and the two buckles 14a are arranged along a length direction of the second surrounding edge structure 16a. Still referring to FIG. 2, clamping hooks of the two buckles 14a are opposite to each other, to be specific, bending directions of the clamping hooks of the two buckles 14a are opposite. When the clamping slot 14b is correspondingly disposed, there may also be two clamping slots 14b, and the two clamping slots 14b are arranged along a length direction of the second surrounding edge structure 16b. When the buckles 14a are connected to the clamping slots 14b, because the bending directions of the clamping hooks of the two buckles 14a are opposite, when a misplacement occurs between the first housing 10a and the second housing 10b in the length directions of the first housing 10a and the second housing 10b, a reliable connection can still be maintained, thereby improving reliability of the cable protective housing 10. Certainly, in addition to the example in FIG. 2, the bending directions of the clamping hooks of the two buckles 14a may also be the same. This can also improve stability of the fitting between the buckles 14a and the clamping slots 14b, and ensure the reliability of the cable protective housing 10 during use. Certainly, a quantity of buckles 14a may also be set to three or more than three, and correspondingly, a quantity of clamping slots 14b may also be three or more than three.

Still referring FIG. 2, a notch 15 is further disposed on the second surrounding edge structure 16a of the first housing 10a. However, the notch 15 is not disposed on the second surrounding edge structure 16b of the first housing 10a. Referring to FIG. 1 together, when the first housing 10a is connected to the second housing 10b, the buckles 14a are clamped with the clamping slots 14b, and a groove is enclosed between the notch 15 and the second surrounding edge structure 16b. When the first housing 10a and the second housing 10b need to be opened, a tool may be inserted into the groove to lever the buckles and the clamping slots open. For example, a flat-head screwdriver or another tool is inserted into the groove for rotation, to separate the first housing 10a and the second housing 10b. Still referring to FIG. 2, when the groove is disposed, the two buckles 14a may be symmetrically disposed relative to the notch 15. When the tool is used to level the buckles and the clamping slots open, it is ensured that force of the two buckles 14a is balanced.

Still referring to FIG. 1 and FIG. 2, when the foregoing notch 15 is disposed, the notch 15 is directly exposed. Consequently, a non-staff can directly see a shape of the groove and use the tool to insert into the groove to level the first housing 10a and the second housing 10b open, and the pre-connected cable is unsafe. In this embodiment of this application, a baffle plate 11 that shields the notch 15 may be further disposed on the disposed second surrounding edge structure 16a. The baffle plate 11 is capable of rotating relative to the surrounding edge structure. In a specific implementation, the baffle plate 11 is integrated with the second surrounding edge structure 16a, and the baffle plate 11 is flexibly connected to the second surrounding edge structure 16a, so that the baffle plate 11 is capable of rotating relative to the notch 15. Still referring to FIG. 2, when the baffle plate 11 is disposed, the baffle plate 11 is located inside the notch 15, and has a specified distance from a side surface of the second surrounding edge structure 16a. As shown in FIG. 1, the baffle plate 11 is located inside the notch 15, and has the specific distance from the side surface of the second surrounding edge structure 16a. When the first housing 10a is connected to the second housing 10b, the baffle plate 11 is located inside the notch. When the tool is required to insert, the tool can be directly inserted into the exposed groove, so that the tool can be easily inserted into the notch 15, thereby facilitating a user operation.

Certainly, FIG. 2 shows only an example of a specific implementation for facilitating opening of the cable protective housing 10. In this embodiment of this application, notches may alternatively be disposed on both the second surrounding edge structure 16a and the second surrounding edge structure 16b. In addition, when the first housing 10a is connected to the second housing 10b, the two notches form grooves that fit the tool.

Referring to FIG. 1 and FIG. 4 together, FIG. 4 shows a use state of the cable protective housing 10. In FIG. 1, openings are opened at two ends of the cable protective housing 10. When the first housing 10a is connected to the second housing 10b, the first groove 12a and the first groove 12b enclose the first accommodation cavity that accommodates the cable connector 50, and a cross-sectional area of the first accommodation cavity is greater than a cross-sectional area of the cable connector 50. The second groove 13a and the second groove 13b enclose the second accommodation cavity that accommodates the cable installation head 20, and a cross-sectional area of the second accommodation cavity is greater than a cross-sectional area of the cable installation head 20. Referring to FIG. 4 together, the first accommodation cavity and the second accommodation cavity pass through the entire cable protective housing 10. During use, the cable connector 50 of a cable 30 is located inside the first accommodation cavity, the cable installation head 20 is located inside the second accommodation cavity, and the cable protective housing 10 is capable of rotating relative to the cable connector 50 and the cable installation head 20. It can be learned from the foregoing descriptions that when the cable 30 is removed, the cable connector 50 needs to be rotated relative to the cable installation head 20. When the cable protective housing 10 provided in this embodiment of this application is sleeved on the cable connector 50 and the cable installation head 20, the cable protective housing 10 rotates relative to the cable connector 50 and the cable installation head 20 at the same time, so as to prevent the cable connector 50 from rotating relative to the cable installation head 20, thereby protecting a connection between the cable connector 50 and the cable installation head 20.

In addition, when the cable protective housing 10 is assembled to the cable 30, because diameter sizes of the first accommodation cavity and the second accommodation cavity are respectively greater than diameter sizes of the cable connector 50 and the cable 30, axial limiting needs to be performed when the cable protective housing 10 is disposed. As shown in FIG. 2 and FIG. 5, FIG. 5 is a schematic diagram of cooperation between a connecting wire 40, the cable 30, and the cable protective housing 10. In this embodiment of this application, one end that is of the first groove 12a and that is away from the second groove 13a is provided with a limiting bulge 101 configured to be clamped into the cable 30. To be specific, a protrusion structure is disposed at an end of the first housing structure 18a, to limit axial sliding of the cable protective housing 10. Similarly, a limiting bulge 102 is also disposed at an end of the second housing structure 18b. A limiting structure 103 shown in FIG. 1 is formed on the first housing 10a and the second housing 10b.

For ease of understanding a connection manner between the cable protective housing 10 and the cable 30, a structure of the cable 30, and a connection manner between the cable 30 and the splitting and splicing closure or the fiber access terminal are first described. When the cable 30 is cooperated with the splitting and splicing closure or the fiber access terminal, the splitting and splicing closure is used as an example. The cable 30 is connected to the splitting and splicing closure through a connecting wire 40. Each end of the connecting wire 40 is provided with a sleeve ring. One sleeve ring 41 is sleeved between the cable 30 and the cable connector 50, and the other sleeve ring 41 is configured to be sleeved on the splitting and splicing closure. When the cable 30 is removed from the splitting and splicing closure (the cable connector 50 is separated from the cable installation head 20), the cable 30 can be connected to the splitting and splicing closure through the connecting wire 40, to prevent the cable 30 from falling off and facilitate re-installation. When the connecting wire 40 is connected to the cable 30, as shown in FIG. 5 and FIG. 6, FIG. 5 is a schematic diagram of the cooperation between the connecting wire 40, the cable 30, and the cable protective housing 10, and FIG. 6 is a partial enlarged view of the position A in FIG. 5. In this embodiment of this application, a step structure is formed between the rotating connector at an end of the cable 30 and the cable 30, the cross-sectional diameter of the cable connector 50 is greater than a cross-sectional diameter of the cable 30, and the sleeve ring 41 of the connecting wire 40 is sleeved between the cable 30 and the cable connector 50. In addition, the limiting is performed by using the cable 30 and the cable connector 50. In this way, axial sliding of the sleeve ring 41 is limited. Referring to FIG. 1, FIG. 2, and FIG. 6 together, two sides of the limiting structure 103 disposed at the end of the protective housing 10 can respectively be pressed against the sleeve ring 41 and the cable connector 50, to limit the axial sliding of the cable protective housing 10. When the cable protective housing 10 is sleeved on the cable 30, although the diameter sizes of the first accommodation cavity and the second accommodation cavity are greater than the diameter sizes of the cable connector 50 and the cable installation head 20, the cable protective housing 10 cannot be removed from the cable connector 50 due to the axial sliding of the sleeve ring 41. The cable protective housing 10 cable is only capable of rotating relative to the cable connector 50 and the cable installation head 20, thereby protecting the connection between the cable connector 50 and the cable installation head 20, and preventing the cable 30 from being maliciously damaged. In addition, the cable 30 and the cable protective housing 10 are protected in a one-to-one correspondence. When each cable 30 needs to be separately disassembled, only a cable protective housing 10 corresponding to the cable 30 needs to be disassembled, and another cable 30 is not affected, thereby facilitating maintenance of the cable 30.

When no connecting wire 40 is connected between the cable 30 and the splitting and splicing closure, the limiting bulge 101 of the cable protective housing 10 is inserted into a gap between the cable 30 and the cable connector 50, to limit the axial sliding of the cable protective housing 10.

Certainly, FIG. 1 and FIG. 2 show only a specific detachable connection manner. In the cable protective housing 10 provided in this embodiment of this application, the first housing 10a may be connected to the second housing 10b through the fitting between the buckles 14a and the clamping slots 14b on both sides of the first housing 10a and the second housing 10b. To be specific, the first surrounding edge structure 19a is connected to the first surrounding edge structure 19b by using the foregoing structure of the buckle 14a and the clamping slot 14b, and the second surrounding edge structure 16a is connected to the second surrounding edge structure 16b by using the foregoing structure of the buckle 14a and the clamping slot 14b.

It can be learned from the foregoing descriptions that, for the splitting and splicing closure or the fiber access terminal that is used in an exposed environment, in this embodiment of this application, the single-part and integrated cable protective housing 10 is used to implement independent protection for a single cable connector 50. An essence of the cable protective housing 10 is to provide independent physical protection for a single input/output cable connector. An application scenario does not depend on a size of the splitting and splicing closure, an arrangement of the connectors, and the like. Therefore, universality of the cable protective housing 10 is relatively strong. In addition, a single part design is used to ensure a simple structure and easy installation.

An embodiment of this application further provides a communication device. The communication device includes a device body and at least one cable 30. At least one cable installation head 20 that is in a one-to-one correspondence with the at least one cable 30 is disposed on the device body. Each cable 30 is provided with a cable connector 50, and each cable connector 50 is detachably fastened and connected to a corresponding cable installation head 20. The foregoing cable protective housing 10 that is sleeved on each cable connector 50 and the corresponding cable installation head 20 is further included. The foregoing device body may be a splitting and splicing closure, a fiber access terminal, or another communication device. When the cable 30 is connected to the device body, each cable 30 is sleeved with a connecting wire 40, and the connecting wire 40 is fastened and connected to the device body. For details, refer to the foregoing descriptions. In this embodiment, an axial sliding direction of the cable protective housing 10 is limited by using a limiting bulge 101, and when the cable protective housing 10 is sleeved on the cable connector 50 and the cable installation head 20, the cable protective housing 10 is capable of rotating relative to the cable connector 50. When the cable 30 is removed from the cable installation head 20, the cable connector 50 needs to be rotated relative to the cable installation head 20, and the disposed cable protective housing 10 prevents the cable connector 50 from being directly rotated. Therefore, the cable connector 50 cannot be directly removed from the cable installation head 20 under protection of the cable protective housing 10, thereby improving security of the cable 30.
The foregoing descriptions are merely specific implementations of this application, but are not intended to limit the protection scope of this application. Therefore, the protection scope of this application shall be subject to the protection scope of the claims.

## Claims

1. A cable protective housing (10), comprising two housings (10a, 10b),
wherein the two housings (10a, 10b) are detachably fastened and connected; each housing (10a, 10b) comprises a first groove (12a, 12b) and a second groove (13a, 13b) that communicates with the first groove (12a, 12b), and one end that is of the first groove (12a, 12b) and that is away from the second groove (13a, 13b) is provided with a limiting bulge (101, 102) configured to be clamped into a cable (30); and
when the two housings (10a, 10b) are fastened and connected, the two first grooves (12a, 12b) enclose a first accommodation cavity configured to accommodate a cable connector (50), the limiting bulge (101, 102) is configured to limit axial sliding of the cable connector (50) and the first accommodation cavity, and the two second grooves (13a, 13b) enclose a second accommodation cavity that accommodates a cable installation head (20),
wherein the two housings (10a, 10b) are detachably fastened and connected through fitting between buckles (14a) and clamping slots (14b),
wherein each housing (10a, 10b) comprises a first housing structure (18a, 18b) and a second housing structure connected to the first housing structures (18a, 18b), the first groove (12a, 12b) is disposed inside the first housing structure (18a, 18b), and the second groove (13a, 13b) is disposed inside the second housing structure (17a, 17b),
whereas a cross-sectional size of the second housing structure is greater than a cross-sectional size of the first housing structure,
wherein each first housing structure (18a, 18b) is provided with a surrounding edge structure (16a, 16b, 19a, 19b), whereby a first surrounding edge structure (19a) and a second surrounding edge structures (16a) are disposed on two sides of the first housing structure (18a) and an other first surrounding edge structure (19b) and an other second surrounding edge structures (16b) are disposed on two sides of the other first housing structure (18b); and when the two housings (10a, 10b) are detachably fastened and connected by using the buckles (14a) and the clamping slots (14b), the buckles (14a) and the clamping slots (14b) are respectively and correspondingly disposed on the surrounding edge structures (16a, 16b, 19a, 19b) of the two first housing structures (18a, 18b).

2. The cable protective housing according to claim 1, wherein
there are two buckles (14a), and the two buckles (14a) are symmetrically disposed.

3. The cable protective housing according to claim 2,
wherein bending directions of clamping hooks of the two buckles (14a) are opposite or the same.

4. The cable protective housing according to any one of claims 1 to 3,
wherein a notch (15) is disposed in the surrounding edge structure.

5. The cable protective housing according to claim 4,
wherein the notch (15) is located between the two buckles (14a).

6. The cable protective housing according to claim 3 or 4,
wherein a baffle plate (11) that shields the notch (15) is disposed on the surrounding edge structure, and the baffle plate (11) is capable of rotating relative to the surrounding edge structure.

7. The cable protective housing according to claim 6,
wherein the baffle plate (11) is located inside the notch (15) and has a specified distance from a side surface of the surrounding edge structure.

8. A communication device, comprising a device body and at least one cable (30),
wherein at least one cable installation head (20) that is in a one-to-one correspondence with the at least one cable (30) is disposed on the device body; and each cable (30) is provided with a cable connector (50), and each cable connector (50) is detachably fastened and connected to a corresponding cable installation head (20); and
a protective case that is sleeved on each cable connector (50) and the corresponding cable installation head (20), wherein the protective case is the cable protective housing (10) according to any one of claims 1 to 7.

9. The communication device according to claim 8,
wherein each cable (30) is sleeved with a connecting wire (40), and the connecting wire (40) is fastened and connected to the device body.

## Patentansprüche

1. Kabelschutzgehäuse (10), umfassend zwei Gehäuse (10a, 10b), wobei die zwei Gehäuse (10a, 10b) lösbar befestigt und verbunden sind; jedes Gehäuse (10a, 10b) eine erste Nut (12a, 12b) und eine zweite, mit der ersten Nut (12a, 12b) in Verbindung stehende Nut (13a, 13b) umfasst, und wobei ein Ende, das zu der ersten Nut (12a, 12b) gehört und von der zweiten Nut (13a, 13b) entfernt ist, mit einer Begrenzungswölbung (101, 102) bereitgestellt ist, die dazu konfiguriert ist, in ein Kabel (30) geklemmt zu werden; und
wenn die zwei Gehäuse (10a, 10b) befestigt und verbunden sind, die zwei ersten Nuten (12a, 12b) einen ersten Aufnahmehohlraum umschließen, der dazu konfiguriert ist, einen Kabelverbinder (50) aufzunehmen, wobei die Begrenzungswölbung (101, 102) dazu konfiguriert ist, das axiale Gleiten des Kabelverbinders (50) und des ersten Aufnahmehohlraums zu begrenzen, und die zwei zweiten Nuten (13a, 13b) einen zweiten Aufnahmehohlraum umschließen, der einen Kabeleinbaukopf (20) aufnimmt,
wobei die zwei Gehäuse (10a, 10b) durch Einpassen zwischen Schnallen (14a) und Klemmschlitzen (14b) lösbar befestigt und verbunden sind,
wobei jedes Gehäuse (10a, 10b) eine erste Gehäusestruktur (18a, 18b) und eine zweite Gehäusestruktur umfasst, die mit den ersten Gehäusestrukturen (18a, 18b) verbunden ist, wobei die erste Nut (12a, 12b) innerhalb der ersten Gehäusestruktur (18a, 18b) angeordnet ist und die zweite Nut (13a, 13b) innerhalb der zweiten Gehäusestruktur (17a, 17b) angeordnet ist,
wobei eine Querschnittsgröße der zweiten Gehäusestruktur größer ist als eine Querschnittsgröße der ersten Gehäusestruktur,
wobei jede erste Gehäusestruktur (18a, 18b) mit einer umgebenden Kantenstruktur (16a, 16b, 19a, 19b) bereitgestellt ist, wodurch eine erste umgebende Kantenstruktur (19a) und eine zweite umgebende Kantenstruktur (16a) auf zwei Seiten der ersten Gehäusestruktur (18a) angeordnet sind und eine andere erste umgebende Kantenstruktur (19b) und eine andere zweite umgebende Kantenstruktur (16b) an zwei Seiten der anderen ersten Gehäusestruktur (18b) angeordnet sind; und wenn die zwei Gehäuse (10a, 10b) unter Verwendung der Schnallen (14a) und der Klemmschlitze (14b) lösbar befestigt und verbunden sind, die Schnallen (14a) und die Klemmschlitze (14b) jeweils und entsprechend an den umgebenden Kantenstrukturen (16a, 16b, 19a, 19b) der zwei ersten Gehäusestrukturen (18a, 18b) angeordnet sind.

2. Kabelschutzgehäuse gemäß Anspruch 1, wobei
zwei Schnallen (14a) vorhanden sind und die zwei Schnallen (14a) symmetrisch angeordnet sind.

3. Kabelschutzgehäuse gemäß Anspruch 2,
wobei Biegerichtungen von Klemmhaken der zwei Schnallen (14a) entgegengesetzt oder gleich sind.

4. Kabelschutzgehäuse gemäß einem der Ansprüche 1 bis 3,
wobei eine Kerbe (15) in der umgebenden Kantenstruktur angeordnet ist.

5. Kabelschutzgehäuse gemäß Anspruch 4,
wobei sich die Kerbe (15) zwischen den zwei Schnallen (14a) befindet.

6. Kabelschutzgehäuse gemäß Anspruch 3 oder 4,
wobei eine die Kerbe (15) abschirmende Prallplatte (11) an der umgebenden Kantenstruktur angeordnet ist und die Prallplatte (11) in der Lage ist, sich in Bezug auf die umgebende Kantenstruktur zu drehen.

7. Kabelschutzgehäuse gemäß Anspruch 6,
wobei die Prallplatte (11) sich innerhalb der Kerbe (15) befindet und einen definierten Abstand von einer Seitenoberfläche der umgebenden Kantenstruktur aufweist.

8. Kommunikationsgerät, umfassend einen Gerätkörper und mindestens ein Kabel (30),
wobei mindestens ein Kabeleinbaukopf (20), der in einer Einszu-Eins-Korrespondenz mit dem mindestens einen Kabel (30) steht, auf dem Gerätkörper angeordnet ist; und jedes Kabel (30) mit einem Kabelverbinder (50) bereitgestellt ist und jeder Kabelverbinder (50) mit einem entsprechenden Kabeleinbaukopf (20) lösbar befestigt und verbunden ist; und
eine Schutzhülse, die auf jeden Kabelverbinder (50) und den entsprechenden Kabeleinbaukopf (20) ummantelt ist, wobei die Schutzhülse das Kabelschutzgehäuse (10) gemäß einem der Ansprüche 1 bis 7 ist.

9. Kommunikationsgerät gemäß Anspruch 8,
wobei jedes Kabel (30) mit einem Verbindungsdraht (40) ummantelt ist und der Verbindungsdraht (40) an dem Gerätkörper befestigt und mit diesem verbunden ist.

## Revendications

1. Boîtier de protection de câble (10), comprenant deux boîtiers (10a, 10b),
dans lequel les deux boîtiers (10a, 10b) sont fixés et reliés de manière amovible ; chaque boîtier (10a, 10b) comprend une première rainure (12a, 12b) et une seconde rainure (13a, 13b) qui communique avec la première rainure (12a, 12b), et une extrémité qui fait partie de la première rainure (12a, 12b) et qui est éloignée de la seconde rainure (13a, 13b) est munie d'un renflement de limitation (101, 102) configuré pour être encastré dans un câble (30) ; et
lorsque les deux boîtiers (10a, 10b) sont fixés et reliés, les deux premières rainures (12a, 12b) renferment une première cavité de réception configurée pour recevoir un connecteur de câble (50), le renflement de limitation (101, 102) est configuré pour limiter un coulissement axial du connecteur de câble (50) et de la première cavité de réception, et les deux secondes rainures (13a, 13b) renferment une seconde cavité de réception qui reçoit une tête d'installation de câble (20),
dans lequel les deux boîtiers (10a, 10b) sont fixés et reliés de manière amovible par emboîtement entre des attaches (14a) et des fentes de serrage (14b),
dans lequel chaque boîtier (10a, 10b) comprend une première structure de boîtier (18a, 18b) et une seconde structure de boîtier reliée aux premières structures de boîtier (18a, 18b), la première rainure (12a, 12b) est disposée à l'intérieur de la première structure de boîtier (18a, 18b), et la seconde rainure (13a, 13b) est disposée à l'intérieur de la seconde structure de boîtier (17a, 17b),
tandis qu'une taille de section transversale de la seconde structure de boîtier est supérieure à une taille de section transversale de la première structure de boîtier,
dans lequel chaque première structure de boîtier (18a, 18b) est munie d'une structure de bord environnante (16a, 16b, 19a, 19b), moyennant quoi une première structure de bord environnante (19a) et une seconde structure de bord environnante (16a) sont disposées sur deux côtés de la première structure de boîtier (18a) et une autre première structure de bord environnante (19b) et une autre seconde structure de bord environnante (16b) sont disposées sur deux côtés de l'autre première structure de boîtier (18b) ; et lorsque les deux boîtiers (10a, 10b) sont fixés et reliés de manière amovible au moyen des attaches (14a) et des fentes de serrage (14b), les attaches (14a) et les fentes de serrage (14b) sont disposées respectivement et de manière correspondante sur les structures de bord environnantes (16a, 16b, 19a, 19b) des deux premières structures de boîtier (18a, 18b) .

2. Boîtier de protection de câble selon la revendication 1, dans lequel
il y a deux attaches (14a), et les deux attaches (14a) sont disposées symétriquement.

3. Boîtier de protection de câble selon la revendication 2,
dans lequel les directions de flexion de crochets de serrage des deux attaches (14a) sont opposées ou identiques.

4. Boîtier de protection de câble selon l'une quelconque des revendications 1 à 3,
dans lequel une encoche (15) est disposée dans la structure de bord environnante.

5. Boîtier de protection de câble selon la revendication 4,
dans lequel l'encoche (15) est située entre les deux attaches (14a) .

6. Boîtier de protection de câble selon la revendication 3 ou 4,
dans lequel une plaque déflectrice (11) qui protège l'encoche (15) est disposée sur la structure de bord environnante, et la plaque déflectrice (11) est apte à tourner par rapport à la structure de bord environnante.

7. Boîtier de protection de câble selon la revendication 6,
dans lequel la plaque déflectrice (11) est située à l'intérieur de l'encoche (15) et présente une distance spécifiée par rapport à une surface latérale de la structure de bord environnante.

8. Dispositif de communication, comprenant un corps de dispositif et au moins un câble (30),
dans lequel au moins une tête d'installation de câble (20) qui est en correspondance biunivoque avec l'au moins un câble (30) est disposée sur le corps de dispositif ; et chaque câble (30) est muni d'un connecteur de câble (50), et chaque connecteur de câble (50) est fixé et relié de manière amovible à une tête d'installation de câble (20) correspondante ; et
une coque de protection qui est emmanchée sur chaque connecteur de câble (50) et sur la tête d'installation de câble (20) correspondante, dans lequel la coque de protection est le boîtier de protection de câble (10) selon l'une quelconque des revendications 1 à 7.

9. Dispositif de communication selon la revendication 8,
dans lequel chaque câble (30) est emmanché avec un fil de liaison (40), et le fil de liaison (40) est fixé et relié au corps de dispositif.
